# FASCICULE DE BREVET EUROPEEN

(11) **EP 3 118 920 B1**
(45) Date de publication et mention de la délivrance du brevet: **25.10.2017**
(21) Numéro de dépôt: 16177442.7
(22) Date de dépôt: 01.07.2016
(51) Int. Cl.: H01M 6/40, H01M 10/04, H01M 4/04

(54) **BATTERIE EN COUCHES MINCES AUTOSUPPORTÉE ET PROCÉDÉ DE FABRICATION D'UNE TELLE BATTERIE**
SELBSTTRAGENDE DÜNNSCHICHT-BATTERIE, UND HERSTELLUNGSVERFAHREN EINER SOLCHEN BATTERIE
SELF-SUPPORTING THIN FILM BATTERY AND METHOD FOR PRODUCING SUCH A BATTERY

(30) Priorité: 13.07.2015 FR 1556660
(43) Date de publication de la demande: 18.01.2017
(73) Titulaire: STMicroelectronics (Tours) SAS, 37100 Tours (FR)
(72) Inventeur: LADROUE, Julien, 37380 MONNAIE (FR); BOUFNICHEL, Mohamed, 37380 MONNAIE (FR)
(74) Mandataire: Thibon, Laurent

(56) Documents cités:
- FR-A1- 2 960 346
- US-A1- 2004 131 925
- US-A1- 2012 214 047
- US-A1- 2014 273 890

## Description

### Domaine

La présente demande concerne le domaine des batteries en couches minces.

### Exposé de l'art antérieur

On désigne classiquement par les termes batterie en couches minces ou microbatterie, un assemblage comprenant un substrat de support et, sur une face du substrat, un empilement de couches formant un élément actif de batterie, cet empilement comportant notamment une couche d'électrolyte solide entre une électrode négative et une électrode positive. L'épaisseur totale d'une batterie en couches minces est typiquement de l'ordre de quelques dizaines à quelques centaines de µm, pour une surface allant de quelques mm² à quelques cm², ce qui permet de loger la batterie dans des espaces très restreints et permet de plus de réaliser des batteries plus ou moins flexibles (selon les caractéristiques du substrat de support). Pour réaliser de telles batteries, il est connu d'utiliser des techniques de pulvérisation au travers d'un pochoir ("shadow mask" en anglais). Ces techniques consistent à placer un pochoir ou masque au-dessus du substrat de support et à pulvériser, au travers de ce masque, les différentes couches constitutives de l'élément actif de la batterie. Dans de telles batteries, les bornes de contact positive et négative de la batterie, destinées à être connectées à un dispositif extérieur, sont généralement disposées du même côté du substrat de support, et ont leurs faces de connexion à l'extérieur orientées dans la même direction.

Le document US2004/131925 décrit un procédé de fabrication d'une batterie en couche minces comportant les étapes suivantes: a) former, sur la face supérieure d'un substrat de support, un empilement actif vertical dont la couche inférieure est une couche métallique dans laquelle est formée une première borne de contact de la batterie et dont la couche supérieure est une couche métallique dans laquelle est formée une deuxième borne de contact de la batterie. Ce document décrit en outre une batterie en couches minces déposée sur un support et ayant une structure de couches correspondant au procédé décrit ci-dessus.

### Résumé

Un mode de réalisation prévoit un procédé de fabrication d'une batterie en couches minces autosupportée, comportant les étapes suivantes : a) former, sur la face supérieure d'un substrat de support, un empilement actif vertical dont la couche inférieure est une couche métallique dans laquelle est formée une première borne de contact d'une première polarité de la batterie et dont la couche supérieure est une couche métallique dans laquelle est formée une deuxième borne de contact d'une deuxième polarité de la batterie ; b) coller un film de support sur la face supérieure de la couche supérieure ; et c) décoller la couche inférieure du substrat au moyen d'un faisceau laser projeté à travers le substrat depuis sa face inférieure.

Selon un mode de réalisation, l'étape a) comprend les étapes suivantes : déposer la première couche métallique sur la face supérieure du substrat ; déposer une première couche de passivation sur la face supérieure de la première couche ; et former une première ouverture traversante dans la première couche de passivation en regard d'une région non périphérique de la première borne de contact.

Selon un mode de réalisation, l'étape a) comprend en outre le dépôt, sur la face supérieure de la couche de passivation, d'un empilement vertical comportant une couche métallique de collecteur de cathode, une couche de cathode, une couche d'électrolyte, une couche d'anode et une couche de collecteur d'anode.

Selon un mode de réalisation, l'étape a) comprend en outre la formation, depuis la face supérieure de l'empilement formé par la couche de collecteur de cathode, la couche de cathode, la couche d'électrolyte, la couche d'anode et la couche de collecteur d'anode, d'une première tranchée délimitant le contour de la batterie, cette tranchée débouchant sur la première couche de passivation.

Selon un mode de réalisation, l'étape a) comprend en outre les étapes suivantes : déposer une deuxième couche de passivation sur la face supérieure de l'empilement formé par la couche de collecteur de cathode, la couche de cathode, la couche d'électrolyte, la couche d'anode et la couche de collecteur d'anode, ainsi que sur les parois et sur le fond de la première tranchée ; déposer une couche de résine de protection au-dessus de la deuxième couche de passivation ; et former une deuxième ouverture traversante dans la couche de résine et dans la deuxième couche de passivation en regard d'une région non périphérique de la deuxième borne de contact.

Selon un mode de réalisation, l'étape a) comprend en outre le dépôt de la dernière couche métallique sur la face supérieure de la couche de résine et dans la deuxième ouverture traversante.

Selon un mode de réalisation, l'étape a) comprend en outre la formation, depuis la face supérieure de l'empilement actif, d'une deuxième tranchée délimitant le contour de la batterie, la deuxième tranchée étant sensiblement alignée sur la première tranchée mais de largeur inférieure à celle de la première tranchée, et débouchant sur le substrat de support.

Selon un mode de réalisation, une troisième borne de contact de deuxième polarité de la batterie, reliée par un via conducteur à la deuxième borne de contact, est en outre formée dans la première couche métallique, et une quatrième borne de première polarité de la batterie, reliée par un via conducteur à la première borne de contact, est en outre formée dans la dernière couche métallique.

Selon un mode de réalisation, le film de support est un film autocollant.

Un autre mode de réalisation prévoit une batterie en couches minces autosupportée, constituée d'un empilement actif vertical dont la première couche est une couche métallique dans laquelle est formée une première borne de contact d'une première polarité de la batterie et dont la dernière couche est une couche métallique dans laquelle est formée une deuxième borne de contact d'une deuxième polarité de la batterie.

Selon un mode de réalisation, la première couche métallique comprend en outre une troisième borne de contact de deuxième polarité de la batterie reliée par un via conducteur à la deuxième borne de contact, et la dernière couche métallique comprend en outre une quatrième borne de contact de première polarité de la batterie reliée par un via conducteur à la première borne de contact.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
les figures 1A à 1K sont des vues en coupe illustrant schématiquement des étapes d'un exemple d'un mode de réalisation d'un procédé de fabrication d'une batterie en couches minces ; et
la figure 2 est une vue en coupe illustrant schématiquement une variante du procédé des figures 1A à 1K.

### Description détaillée

De mêmes éléments ont été désignés par de mêmes références aux différentes figures et, de plus, les diverses figures ne sont pas tracées à l'échelle. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures, étant entendu que, dans la pratique, les assemblages représentés peuvent être orientés différemment. Sauf précision contraire, les expressions "approximativement", "sensiblement", "environ" et "de l'ordre de" signifient à 10 % près, de préférence à 5 % près.

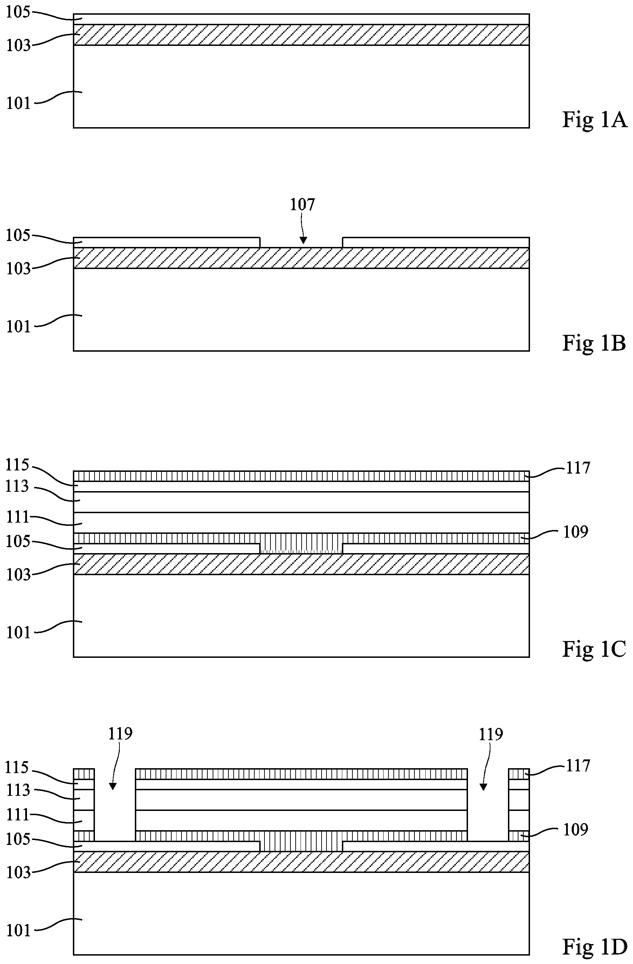

Les figures 1A à 1K sont des vues en coupe illustrant schématiquement des étapes d'un exemple d'un mode de réalisation d'un procédé de fabrication d'une batterie en couches minces.

La figure 1A illustre une étape de dépôt, sur la face supérieure d'un substrat de support 101, d'une couche métallique 103 destinée à former une première borne de contact de la batterie, la borne positive dans l'exemple représenté. Le substrat 101 est par exemple en verre, en mica, en céramique ou en silicium. La couche 103 est par exemple en cuivre, en platine, en molybdène, en aluminium, ou en un alliage à base de nickel et de chrome du type commercialisé sous l'appellation Inconel. A titre d'exemple, la couche 103 présente une épaisseur comprise entre 0,5 et 10 µm. La figure 1A illustre en outre une étape de dépôt, sur la face supérieure de la couche 103, d'une couche de passivation 105, par exemple en alumine (Al₂O₃) ou en tout autre matériau diélectrique adapté. A titre d'exemple, la couche 105 présente une épaisseur comprise entre 50 nm et 1 µm.

La figure 1B illustre une étape de réalisation, depuis la face supérieure de l'assemblage, d'une ouverture 107 dans la couche de passivation 105, par exemple dans une zone centrale de la batterie, ou, plus généralement, dans une zone non périphérique de la batterie (c'est-à-dire ne s'étendant pas jusqu'à un bord de la batterie). L'ouverture 107 s'étend sur toute l'épaisseur de la couche 105, et est destinée à permettre de prendre un contact électrique sur la face supérieure de la couche métallique 103 lors d'une étape ultérieure. L'ouverture 107 est par exemple réalisée par gravure laser, par exemple au moyen d'un laser à excimère, qui présente l'avantage d'avoir des caractéristiques, et notamment une longueur d'onde, adaptées au retrait sélectif de la couche 105 par rapport à la couche 103, et de permettre un découpage de la couche 105 avec une bonne résolution. Vue de dessus, l'ouverture 107 a par exemple une forme carrée, rectangulaire, circulaire ou ovale. A titre d'exemple, l'ouverture 107 a une surface comprise entre 4 µm² et 0,25 cm² (dépendant de la surface de la batterie).

La figure 1C illustre une étape de dépôt, sur la face supérieure de la couche de passivation 105, d'un empilement vertical comportant, dans l'ordre à partir de la surface supérieure de la couche 105, une couche métallique de collecteur de cathode 109, par exemple en platine, en molybdène, en aluminium ou en Inconel, une couche de cathode 111, par exemple en LiCoO₂, une couche d'électrolyte 113, par exemple en LiPON, une couche d'anode 115, par exemple en lithium, et une couche métallique de collecteur d'anode 117, par exemple en aluminium ou en cuivre. A titre d'exemple, chacune des couches 109, 111, 113, 115 et 117 présente une épaisseur comprise entre 100 nm et 10 µm. Au niveau de l'ouverture 107 formée dans la couche de passivation 105, la couche de collecteur de cathode 109 est en contact avec la couche métallique inférieure 103.

La figure 1D illustre une étape postérieure au dépôt des couches 109, 111, 113, 115 et 117, au cours de laquelle une tranchée 119 délimitant le contour de la batterie est réalisée depuis la face supérieure de l'assemblage, dans l'empilement formé par les couches 109, 111, 113, 115 et 117. Dans cet exemple, la tranchée 119 traverse les couches 117, 115, 113, 111 et 109 et s'arrête sensiblement au niveau de la face supérieure de la couche de passivation 105. La tranchée 119 est par exemple réalisée par gravure laser, par exemple au moyen d'un laser de type Nd:YAG. A titre d'exemple, la tranchée 119 présente une largeur comprise entre 50 et 500 µm. Vu de dessus, la tranchée forme un contour fermé définissant la forme de la batterie. Tous types de formes de batterie peuvent être envisagés selon les besoins de l'application, par exemple une forme carrée, rectangulaire, circulaire, ovale, etc. A titre de variante, la tranchée 119 peut être réalisée en plusieurs étapes successives de gravure laser, en réduisant la largeur du faisceau laser de gravure entre deux étapes afin de structurer en escalier les flancs de la tranchée.

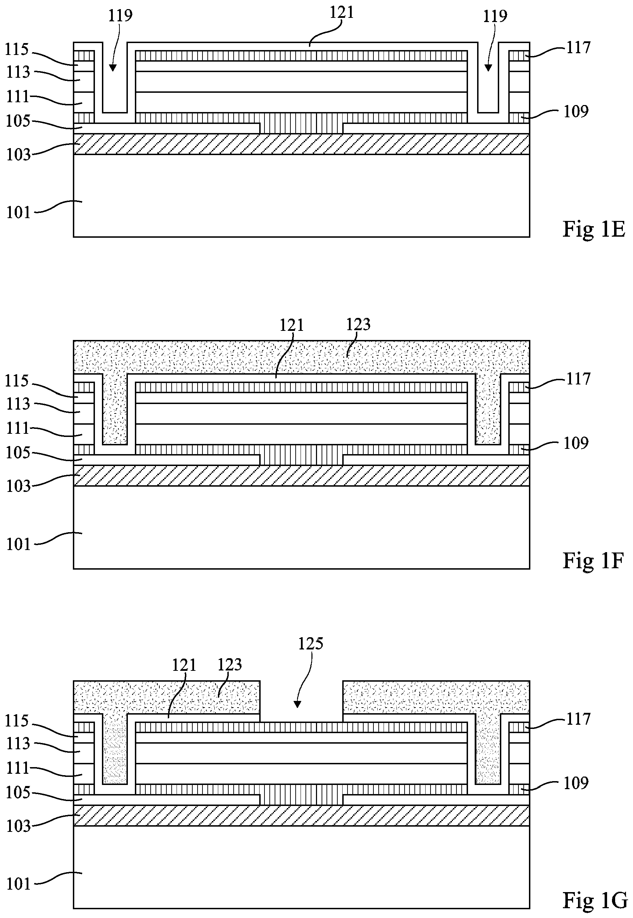

La figure 1E illustre une étape postérieure à la formation de la tranchée 119, au cours de laquelle une couche de passivation 121, par exemple en alumine, est déposée sur la face supérieure de la couche 117, ainsi que sur les parois latérales et sur le fond des tranchées 119. La couche 121 est par exemple déposée par un procédé de dépôt conforme de type ALD (de l'anglais "Atomic Layer Deposition" - dépôt en couches monoatomiques). A titre d'exemple, la couche 121 présente une épaisseur comprise entre 50 nm et 1 µm.

La figure 1F illustre une étape postérieure au dépôt de la couche de passivation 121, au cours de laquelle une couche 123 d'une résine polymère de protection est déposée sur la face supérieure de l'assemblage, comblant totalement ou partiellement les tranchées 119 et revêtant la face supérieure de la couche 121. A titre d'exemple, la couche 123 présente une épaisseur comprise entre 1 et 50 µm.

La figure 1G illustre une étape de réalisation, depuis la face supérieure de l'assemblage, d'une ouverture 125 dans les couches de protection 123 et de passivation 121, par exemple dans une zone centrale de la batterie, ou, plus généralement, dans une zone non périphérique de la batterie (c'est-à-dire ne s'étendant pas jusqu'à un bord de la batterie). L'ouverture 125 s'étend sur toute l'épaisseur des couches 123 et 121, et est destinée à permettre de prendre un contact électrique sur la face supérieure de la couche métallique 117 lors d'une étape ultérieure. L'ouverture 125 est par exemple réalisée par gravure laser, par exemple au moyen d'un laser à excimère. Vue de dessus, l'ouverture 125 a par exemple une forme carrée, rectangulaire, circulaire ou ovale. A titre d'exemple, l'ouverture 125 a une surface comprise entre 4 µm² et 0,25 cm². L'ouverture 125 est par exemple disposée sensiblement en regard de la région de contact entre les couches 103 et 109, c'est-à-dire en regard de l'ouverture 107 de la figure 1B.

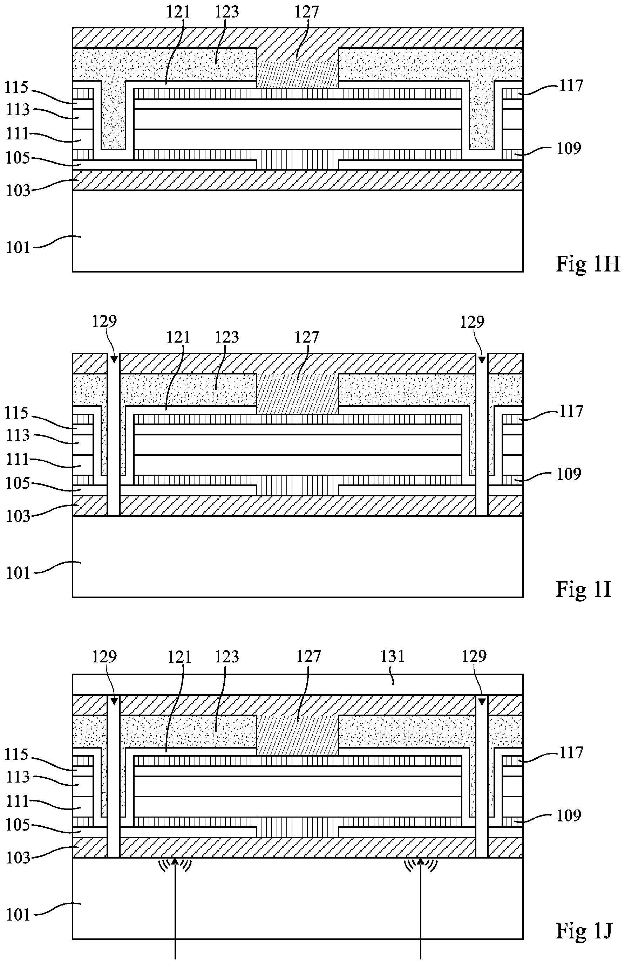

La figure 1H illustre une étape de dépôt, sur la face supérieure de l'assemblage, d'une couche métallique 127 destinée à former la deuxième borne de contact de la batterie, la borne négative dans l'exemple représenté. La couche 127 est en contact avec la face supérieure de la couche 121 et, au niveau de l'ouverture 125, avec la face supérieure de la couche de collecteur d'anode 117. La couche 127 est par exemple en cuivre, en aluminium, en platine, en molybdène ou en Inconel. A titre d'exemple, la couche 127 présente une épaisseur comprise entre 1 et 10 µm.

La figure 1I illustre une étape postérieure au dépôt de la couche 127, au cours de laquelle une tranchée 129 délimitant le contour de la batterie est réalisée depuis la face supérieure de l'assemblage. La tranchée 129 est sensiblement alignée avec la tranchée 119 de la figure 1D, mais présente une largeur inférieure à celle de la tranchée 119. La tranchée 129 traverse les couches 127, 123, 121, 105 et 103, et s'arrête sensiblement sur la face supérieure du substrat 101. La largeur de la tranchée 129 est de préférence choisie de façon qu'une épaisseur non nulle de résine 123, par exemple une épaisseur d'au moins 10 µm, subsiste sur les flancs latéraux de la batterie (au niveau de la portion sensiblement verticale de la couche 121) après la formation de la tranchée. La tranchée 129 a par exemple une largeur comprise entre 30 et 480 µm. La tranchée 129 est par exemple réalisée par gravure laser, par exemple au moyen d'un laser de type Nd:YAG.

La figure 1J illustre une étape postérieure à l'étape de formation de la tranchée 129, au cours de laquelle un film 131, par exemple un film élastique, est collé sur la face supérieure de l'assemblage. Le film 131 est par exemple un film autocollant dont la face autocollante est disposée en contact avec la face supérieure de la couche métallique 127. A titre de variante, le film 131 est fixé au moyen d'une couche de colle préalablement déposée sur la face supérieure de la couche métallique 127. Le film 131 est monté sur un support, non représenté, et a pour fonction de retenir la batterie par sa face supérieure lors d'une étape ultérieure de retrait du substrat de support 101.

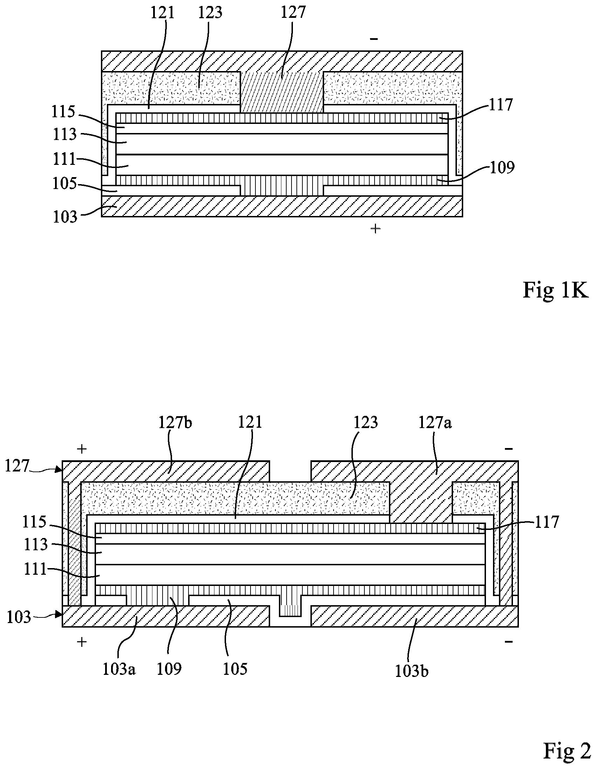

La figure 1K illustre une étape postérieure à la mise en place du film 131, au cours de laquelle le substrat de support 101 est décollé de la couche métallique 103 au moyen d'un faisceau laser projeté depuis la face inférieure de l'assemblage, à travers le substrat 101. La longueur d'onde du laser peut être choisie de façon que, à cette longueur d'onde, le substrat 101 (figure 1J) soit sensiblement transparent et la couche métallique 103 soit opaque ou réfléchissante. Ainsi, en atteignant la couche 103, le laser crée une onde de choc conduisant à rompre les liaisons entre le substrat et la couche 103. A titre d'exemple, un laser à excimère peut être utilisé pour réaliser cette opération.

Une fois le substrat 101 retiré, la batterie peut être décollée du film 131. On obtient alors une batterie en couches minces autosupportée, c'est-à-dire ne comportant pas de substrat de support, telle qu'illustrée par la figure 1K.

On notera que sur les figures 1A à 1K, une seule batterie a été représentée. En pratique, le procédé décrit peut être utilisé pour réaliser simultanément plusieurs batteries à partir d'un même substrat de support.

Les batteries ainsi réalisées présentent l'avantage d'être particulièrement minces, et donc flexibles, puisqu'elles ne comportent pas de substrat de support. A titre d'exemple, le procédé décrit en relation avec les figures 1A à 1K permet de réaliser des batteries d'épaisseur totale comprise entre 20 et 50 µm.

Par ailleurs, les batteries obtenues par le procédé décrit en relation avec les figures 1A à 1K présentent l'avantage d'avoir leurs bornes de contact positive et négative, formées respectivement par les couches 103 et 127, disposées sur des faces opposées de la batterie, et pouvant être orientées dans des directions opposées. Une telle disposition des bornes de contact se prête bien à la réalisation d'un empilement de batteries interconnectées, en vue d'augmenter la capacité et/ou la tension disponible pour une application. Plus particulièrement, N batteries du type représenté en figure 1K, avec N entier supérieur à 1, peuvent être empilées de façon que chaque batterie, à l'exception de la première batterie de l'empilement ait sa borne de contact positive 103 en contact avec la borne de contact négative 127 de la batterie de rang précédent. Ceci revient à connecter en série les N batteries et permet de pouvoir disposer, entre la borne positive 103 de la première batterie et la borne négative 127 de la dernière batterie, d'une tension égale à N fois la tension d'une batterie. A titre de variante, deux batteries du type représenté en figure 1K peuvent être empilées tête bêche, de façon que les deux batteries aient leurs bornes de contact négatives 127 en contact l'une de l'autre. Un premier élément de connexion peut être relié aux bornes négatives 127, et un deuxième élément de connexion peut être relié aux bornes positives 103. Ceci revient à connecter en parallèle les deux batteries et permet de pouvoir disposer, entre les deux éléments de connexion, d'une tension égale à la tension d'une batterie, et d'une capacité égale à deux fois la capacité d'une batterie.

Un autre avantage de la batterie de la figure 1K est qu'elle comporte une couche d'encapsulation 105, 121 entourant entièrement l'empilement formé par les couches actives 109, 111, 113, 115 et 117 de la batterie, à l'exception des régions de prise de contact inférieure et supérieure correspondant aux ouvertures 107 de la figure 1B et 125 de la figure 1G.

Outre les avantages susmentionnés, le procédé décrit en relation avec les figures 1A à 1K a pour avantage que chacune des couches de la batterie peut être déposée "pleine plaque", c'est-à-dire sur toute la surface de l'assemblage, la forme des batteries étant déterminée lors des opérations de découpe des figures 1D et 1I. Ainsi, le procédé décrit ne nécessite pas l'utilisation de pochoirs, ce qui permet de gagner en densité de fabrication des batteries et laisse une grande liberté quant à la forme donnée aux batteries.

Un autre avantage du procédé décrit en relation avec les figures 1A à 1K est que, une fois décollé, le substrat de support 101 peut être réutilisé pour former d'autres batteries, ce qui permet de minimiser les coûts.

La figure 2 illustre une variante de réalisation de la batterie de la figure 1K.

La batterie de la figure 2 est une batterie autosupportée qui diffère de la batterie de la figure 1K essentiellement en ce que, dans la batterie de la figure 1K, la couche métallique 103, respectivement 127, est une couche continue occupant sensiblement toute la surface de la batterie et définissant une borne de contact positive, respectivement négative de la batterie, alors que, dans la batterie de la figure 2, la couche métallique 103, respectivement 127, est interrompue et comprend deux régions non connectées 103a et 103b, respectivement 127a et 127b. A titre d'exemple, la région 103a est en regard de la région 127b, et la région 103b est en regard de la région 127a. La région 103a (en bas à gauche dans l'exemple représenté) est connectée à la couche de collecteur de cathode 109 et correspond à une première borne de contact positive de la batterie, et la région 127a (en haut à droite dans l'exemple représenté) est connectée à la couche de collecteur d'anode 117 et correspond à une première borne de contact négative de la batterie. La région 103b (en bas à droite dans l'exemple représenté) n'est pas connectée à la couche de collecteur de cathode 109 mais est connectée à la région 127a par un via conducteur traversant. La région 103b correspond à une deuxième borne de contact négative de la batterie. La région 127b (en haut à gauche dans l'exemple représenté) n'est pas connectée à la couche de collecteur d'anode 117 mais est connectée à la région 103a par un via conducteur traversant. La région 127b correspond à une deuxième borne de contact positive de la batterie.

Un avantage de la batterie de la figure 2 est que chacune de ses faces de connexion comprend une borne de contact positive et une borne de contact négative. Ceci permet d'augmenter les possibilités d'interconnexion des batteries lorsque ces dernières sont empilées. A titre d'exemple, N batteries du type représenté en figure 2, avec N entier supérieur à 1, peuvent être empilées de façon que chaque batterie, à l'exception de la première batterie de l'empilement, ait sa borne de contact positive inférieure 103a en contact avec la borne de contact positive supérieure 127b de la batterie de rang précédent, et ait sa borne de contact négative inférieure 103b en contact avec la borne de contact négative supérieure 127a. Ceci revient à connecter les N batteries en parallèle et permet de pouvoir disposer, entre la borne positive 103a et la borne négative 103b de la première batterie de l'empilement, et/ou entre la borne positive 127b et la borne négative 127a de la dernière batterie de l'empilement d'une tension égale à la tension d'une batterie, et d'une capacité égale à N fois la capacité d'une batterie. A titre de variante, les N batteries peuvent être empilées de façon que chaque batterie, à l'exception de la première batterie de l'empilement, ait sa borne de contact positive inférieure 103a en contact avec la borne de contact négative supérieure 127a de la batterie de rang précédent, et ait sa borne de contact négative inférieure 103b en regard de la borne de contact positive supérieure 127b de la batterie de rang précédent, et isolée de la borne 127b de la batterie de rang précédent par une passivation. Ceci revient à connecter les N batteries en série et permet de pouvoir disposer, entre la borne négative inférieure 103b de la première batterie de l'empilement et la borne positive supérieure 127b de la dernière batterie de l'empilement, d'une tension égale à N fois la tension d'une batterie.

Pour réaliser la batterie de la figure 2, le procédé décrit en relation avec les figures 1A à 1K peut par exemple être modifié comme suit.

A l'étape décrite en relation avec la figure 1A, préalablement au dépôt de la couche de passivation 105, une tranchée délimitant les deux bornes de contact 103a et 103b peut être réalisée dans la couche métallique inférieure 103, cette tranchée traversant toute l'épaisseur de la couche 103 et s'arrêtant sensiblement à la surface du substrat 101. Vu de dessus, cette tranchée traverse de bord en bord la batterie, de façon qu'à la fin du procédé, les bornes de contact 103a et 103b soient isolées l'une de l'autre. La couche de passivation 105 est ensuite déposée sur la face supérieure de la couche 103 ainsi que sur les parois latérales et le fond de la tranchée de délimitation des bornes de contact 103a et 103b.

A l'étape décrite en relation avec la figure 1B, l'ouverture 107 est formée en regard de la borne de contact 103a, par exemple dans une zone centrale de la borne 103a, ou, plus généralement, dans une zone non périphérique de la borne 103a.

Les étapes des figures 1C à 1K peuvent par exemple être mises en oeuvre sensiblement de la même manière que ce qui a été décrit précédemment, en faisant attention que l'ouverture 125 de la figure 1G soit située en regard d'une région centrale, ou, plus généralement, d'une région non périphérique de la future borne de connexion 127a. Après le dépôt de la couche métallique supérieure 127, une tranchée délimitant les deux bornes de contact 127a et 127b peut être réalisée dans la couche 127, cette tranchée traversant toute l'épaisseur de la couche 127 et s'arrêtant sensiblement à la surface de la couche de résine 121. Vu de dessus, cette tranchée traverse de bord en bord la batterie, de façon qu'à la fin du procédé, les bornes de contact 127a et 127b soient isolées l'une de l'autre. Un via conducteur traversant vertical reliant la borne de contact 103a à la borne de contact 127b peut être formé au niveau de la région de résine 121 située sur le flanc gauche de la batterie (entre le bord gauche de la batterie et la portion sensiblement verticale de la couche de passivation 121 située du côté du bord gauche de la batterie). Un autre via conducteur traversant vertical reliant la borne de contact 103b à la borne de contact 127a peut être formé au niveau de la région de résine 121 située sur le flanc droit de la batterie (entre le bord droit de la batterie et la portion sensiblement verticale de la couche de passivation 121 située du côté du bord droit de la batterie).

Des modes de réalisation particuliers ont été décrits. Diverses variantes et modifications apparaîtront à l'homme de l'art. En particulier, on a décrit, en relation avec les figures 1A à 1K et 2, des exemples de procédés de fabrication de batteries en couches minces dans lesquels le collecteur de cathode 109 et la couche de cathode 111 sont déposés avant l'électrolyte 113, la couche d'anode 115 et le collecteur d'anode 117. Les modes de réalisation décrits ne se limitent toutefois pas à ce cas particulier. L'homme de l'art saura adapter le procédé décrit en inversant l'ordre de dépôt des éléments de cathode et d'anode.

Par ailleurs, les modes de réalisation décrits ne se limitent pas aux exemples de matériaux mentionnés dans la description à titre d'exemple, en particulier en ce qui concerne les collecteurs d'anode et de cathode, les couches d'anode et de cathode, et la couche d'électrolyte.

En outre, les modes de réalisation décrits ne se limitent pas aux exemples de dimensions mentionnés dans la présente description.

## Revendications

1. Procédé de fabrication d'une batterie en couches minces autosupportée, comportant les étapes suivantes :
a) former, sur la face supérieure d'un substrat de support (101), un empilement actif vertical dont la couche inférieure (103) est une couche métallique dans laquelle est formée une première borne de contact (103 ; 103a) d'une première polarité de la batterie et dont la couche supérieure (127) est une couche métallique dans laquelle est formée une deuxième borne de contact (127 ; 127a) d'une deuxième polarité de la batterie ;
b) coller un film de support (131) sur la face supérieure de la couche supérieure (127) ; et
c) décoller la couche inférieure (103) du substrat (101) au moyen d'un faisceau laser projeté à travers le substrat (101) depuis sa face inférieure.

2. Procédé selon la revendication 1, dans lequel l'étape a) comprend les étapes suivantes :
déposer la première couche métallique (103) sur la face supérieure du substrat (101) ;
déposer une première couche de passivation (105) sur la face supérieure de la première couche (103) ; et
former une première ouverture traversante (107) dans la première couche de passivation (105) en regard d'une région non périphérique de la première borne de contact (103 ; 103a).

3. Procédé selon la revendication 2, dans lequel l'étape a) comprend en outre le dépôt, sur la face supérieure de la couche de passivation (105), d'un empilement vertical comportant une couche métallique de collecteur de cathode (109), une couche de cathode (111), une couche d'électrolyte (113), une couche d'anode (115) et une couche de collecteur d'anode (117).

4. Procédé selon la revendication 3, dans lequel l'étape a) comprend en outre la formation, depuis la face supérieure de l'empilement formé par la couche de collecteur de cathode (109), la couche de cathode (111), la couche d'électrolyte (113), la couche d'anode (115) et la couche de collecteur d'anode (117), d'une première tranchée (119) délimitant le contour de la batterie, cette tranchée débouchant sur la première couche de passivation (105).

5. Procédé selon la revendication 4, dans lequel l'étape a) comprend en outre les étapes suivantes :
déposer une deuxième couche de passivation (121) sur la face supérieure de l'empilement formé par la couche de collecteur de cathode (109), la couche de cathode (111), la couche d'électrolyte (113), la couche d'anode (115) et la couche de collecteur d'anode (117), ainsi que sur les parois et sur le fond de la première tranchée (119) ;
déposer une couche de résine de protection (123) au-dessus de la deuxième couche de passivation (121) ; et
former une deuxième ouverture traversante (125) dans la couche de résine (123) et dans la deuxième couche de passivation (121) en regard d'une région non périphérique de la deuxième borne de contact (127 ; 127a).

6. Procédé selon la revendication 5, dans lequel l'étape a) comprend en outre le dépôt de la dernière couche métallique (127) sur la face supérieure de la couche de résine (123) et dans la deuxième ouverture traversante (125).

7. Procédé selon la revendication 6, dans lequel l'étape a) comprend en outre la formation, depuis la face supérieure de l'empilement actif, d'une deuxième tranchée (129) délimitant le contour de la batterie, la deuxième tranchée (129) étant sensiblement alignée sur la première tranchée (119) mais de largeur inférieure à celle de la première tranchée, et débouchant sur le substrat de support (101).

8. Procédé selon l'une quelconque des revendications 1 à 7, dans lequel une troisième borne de contact (103b) de deuxième polarité de la batterie, reliée par un via conducteur à la deuxième borne de contact (127a), est en outre formée dans la première couche métallique (103), et dans lequel une quatrième borne de première polarité de la batterie, reliée par un via conducteur à la première borne de contact (103a), est en outre formée dans la dernière couche métallique (127).

9. Procédé selon l'une quelconque des revendications 1 à 8, dans lequel le film de support (131) est un film autocollant.

10. Batterie en couches minces autosupportée, constituée d'un empilement actif vertical dont la première couche (103) est une couche métallique dans laquelle est formée une première borne de contact (103 ; 103a) d'une première polarité de la batterie et dont la dernière couche (127) est une couche métallique dans laquelle est formée une deuxième borne de contact (127 ; 127a) d'une deuxième polarité de la batterie.

11. Batterie selon la revendication 10, dans laquelle la première couche métallique (103) comprend en outre une troisième borne de contact (103b) de deuxième polarité de la batterie reliée par un via conducteur à la deuxième borne de contact (127a), et dans laquelle la dernière couche métallique (127) comprend en outre une quatrième borne de contact (127b) de première polarité de la batterie reliée par un via conducteur à la première borne de contact (103a).

## Patentansprüche

1. Verfahren zum Herstellen einer selbsttragenden Dünnschicht-Batterie, umfassend die folgenden Schritte:
a) Ausbilden auf der Oberseite eines Trägersubstrats (101) einer vertikalen aktiven Schichtung, deren untere Schicht (103) eine metallische Schicht ist, in der ein erster Kontaktanschluss (103, 103a) einer ersten Polarität der Batterie ausgebildet ist, und deren obere Schicht (127) eine metallische Schicht ist, in der ein zweiter Kontaktanschluss (127, 127a) einer zweiten Polarität der Batterie ausgebildet ist;
b) Kleben eines Trägerfilms (131) auf die Oberseite der oberen Schicht (127); und
c) Ablösen der unteren Schicht (103) des Substrats (101) mit einem über das Substrat (101) von seiner Unterseite projizierten Laserbündel.

2. Verfahren nach Anspruch 1, wobei der Schritt a) die folgenden Schritte umfasst:
Aufbringen der ersten metallischen Schicht (103) auf der Oberseite des Substrats (101);
Aufbringen einer ersten Passivierungsschicht (105) auf der Oberseite der ersten Schicht (103); und
Ausbilden einer ersten durchgehenden Öffnung (107) in der ersten Passivierungsschicht (105) gegenüber einem nicht peripheren Bereich des ersten Kontaktanschlusses (103, 103a).

3. Verfahren nach Anspruch 2, wobei der Schritt a) ferner das Aufbringen auf der Oberseite der Passivierungsschicht (105) einer vertikalen Schichtung umfassend eine metallische Kathodenkollektorschicht (109), eine Kathodenschicht (111), eine Elektrolytschicht (113), eine Anodenschicht (115) und eine Anodenkollektorschicht (117) umfasst.

4. Verfahren nach Anspruch 3, wobei der Schritt a) ferner das Ausbilden von der Oberseite der durch die Kathodenkollektorschicht (109), die Kathodenschicht (111), die Elektrolytschicht (113), die Anodenschicht (115) und die Anodenkollektorschicht (117) ausgebildeten Schichtung eines ersten Grabens (119) zum Abgrenzen der Kontur der Batterie umfasst, wobei dieser Graben auf der ersten Passivierungsschicht (105) mündet.

5. Verfahren nach Anspruch 4, wobei der Schritt a) ferner die folgenden Schritte umfasst:
Aufbringen einer zweiten Passivierungsschicht (121) auf der Oberseite der von der Kathodenkollektorschicht (109), der Kathodenschicht (111), der Elektrolytschicht (113), der Anodenschicht (115) und der Anodenkollektorschicht (117) ausgebildeten Schichtung sowie auf den Wänden und auf dem Boden des ersten Grabens (119);
Aufbringen einer Schutzharzschicht (123) oberhalb der zweiten Passivierungsschicht (121); und
Ausbilden einer zweiten durchgehenden Öffnung (125) in der Harzschicht (123) und in der zweiten Passivierungsschicht (121) gegenüber einem nicht peripheren Bereich des zweiten Kontaktanschlusses (127,
127a).

6. Verfahren nach Anspruch 5, wobei der Schritt a) ferner das Aufbringen der letzten metallischen Schicht (127) auf der Oberseite der Harzschicht (123) und in der zweiten durchgehenden Öffnung (125) umfasst.

7. Verfahren nach Anspruch 6, wobei der Schritt a) ferner das Ausbilden von der Oberseite der aktiven Schichtung eines zweiten Grabens (129) zum Abgrenzen der Kontur der Batterie umfasst, wobei der zweite Graben (129) im Wesentlichen auf dem ersten Graben (119) ausgerichtet ist, aber eine kleinere Breite als der erste Graben aufweist und auf dem Trägersubstrat (101) mündet.

8. Verfahren nach einem der Ansprüche 1 bis 7, wobei ein dritter Kontaktanschluss (103b) zweiter Polarität der Batterie, durch einen Verbindungsleiter mit dem zweiten Kontaktanschluss (127a) verbunden, ferner in der ersten metallischen Schicht (103) ausgebildet ist, und wobei ein vierter Anschluss erster Polarität der Batterie, durch einen Verbindungsleiter mit dem ersten Kontaktanschluss (103a) verbunden, ferner in der letzten metallischen Schicht (127) ausgebildet ist.

9. Verfahren nach einem der Ansprüche 1 bis 8, wobei der Trägerfilm (131) ein selbstklebender Film ist.

10. Selbsttragende Dünnschicht-Batterie, bestehend aus einer vertikalen aktiven Schichtung, deren erste Schicht (103) eine metallische Schicht ist, in der ein erster Kontaktanschluss (103, 103a) einer ersten Polarität der Batterie ausgebildet ist, und deren letzte Schicht (127) eine metallische Schicht ist, in der ein zweiter Kontaktanschluss (127, 127a) einer zweiten Polarität der Batterie ausgebildet ist.

11. Batterie nach Anspruch 10, wobei die erste metallische Schicht (103) ferner einen dritten Kontaktanschluss (103b) zweiter Polarität der Batterie, durch einen Verbindungsleiter mit dem zweiten Kontaktanschluss (127a) verbunden, umfasst, und wobei die letzte metallische Schicht (127) ferner einen vierten Kontaktanschluss (127b) erster Polarität der Batterie, durch einen Verbindungsleiter mit dem ersten Kontaktanschluss (103a) verbunden, umfasst.

## Claims

1. Process for manufacturing a self-supporting battery made of thin layers, including the following steps:
a) forming, on the upper face of a carrier substrate (101), a vertical active stack the lower layer (103) of which is a metal layer in which a first contact terminal (103; 103a) of a first polarity of the battery is formed and the upper layer (127) of which is a metal layer in which a second contact terminal (127; 127a) of a second polarity of the battery is formed;
b) bonding a carrier film (131) to the upper face of the upper layer (127); and
c) debonding the lower layer (103) of the substrate (101) by means of a laser beam that is projected through the substrate (101) from its lower face.

2. Process according to Claim 1, wherein step a) comprises the following steps:
depositing the first metal layer (103) on the upper face of the substrate (101);
depositing a first passivating layer (105) on the upper face of the first layer (103); and
forming a first through-aperture (107) in the first passivating layer (105) facing a non-peripheral region of the first contact terminal (103; 103a).

3. Process according to Claim 2, wherein step a) furthermore comprises depositing, on the upper face of the passivating layer (105), a vertical stack including a cathode-collector metal layer (109), a cathode layer (111), an electrolyte layer (113), an anode layer (115) and an anode-collector layer (117).

4. Process according to Claim 3, wherein step a) furthermore comprises forming, from the upper face of the stack formed by the cathode-collector layer (109), the cathode layer (111), the electrolyte layer (113), the anode layer (115) and the anode-collector layer (117), a first trench (119) defining the outline of the battery, this trench opening onto the first passivating layer (105).

5. Process according to Claim 4, wherein step a) furthermore comprises the following steps:
depositing a second passivating layer (121) on the upper face of the stack formed by the cathode-collector layer (109), the cathode layer (111), the electrolyte layer (113), the anode layer (115) and the anode-collector layer (117), and on the walls and on the bottom of the first trench (119);
depositing a protecting resist layer (123) on top of the second passivating layer (121); and
forming a second through-aperture (125) in the resist layer (123) and in the second passivating layer (121) facing a non-peripheral region of the second contact terminal (127; 127a).

6. Process according to Claim 5, wherein step a) furthermore comprises depositing the last metal layer (127) on the upper face of the resist layer (123) and in the second through-aperture (125).

7. Process according to Claim 6, wherein step a) furthermore comprises forming, from the upper face of the active stack, a second trench (129) defining the outline of the battery, the second trench (129) being substantially aligned with the first trench (119) but of smaller width than that of the first trench, and opening onto the carrier substrate (101).

8. Process according to any one of Claims 1 to 7, wherein a third contact terminal (103b) of second polarity of the battery, which is connected by a conductive via to the second contact terminal (127a), is furthermore formed in the first metal layer (103), and wherein a fourth terminal of first polarity of the battery, which is connected by a conductive via to the first contact terminal (103a), is furthermore formed in the last metal layer (127).

9. Process according to any one of Claims 1 to 8, wherein the carrier film (131) is a self-adhesive film.

10. Self-supporting battery made of thin layers, said battery consisting of a vertical active stack the first layer (103) of which is a metal layer in which a first contact terminal (103; 103a) of a first polarity of the battery is formed and the last layer (127) of which is a metal layer in which a second contact terminal (127; 127a) of a second polarity of the battery is formed.

11. Battery according to Claim 10, wherein the first metal layer (103) furthermore comprises a third contact terminal (103b) of second polarity of the battery, which is connected by a conductive via to the second contact terminal (127a), and wherein the last metal layer (127) furthermore comprises a fourth contact terminal (127b) of first polarity of the battery, which is connected by a conductive via to the first contact terminal (103a).
